# EUROPEAN PATENT APPLICATION

(11) **EP 2 330 146 A1**
(43) Date of publication of application: **08.06.2011**
(21) Application number: 10193154.1
(22) Date of filing: 30.11.2010
(51) Int. Cl.: C08J 3/24, C08J 9/00, C09J 7/02

(54) **Epdm foam and sealing material**

(30) Priority: 04.12.2009 JP 2009276577
(71) Applicant: NITTO DENKO CORPORATION, Ibaraki-shi, Osaka 567-8680 (JP)
(72) Inventor: Iwase, Takayuki, Osaka 567-8680 (JP); Kawata, Joji, Osaka 567-8680 (JP); Kousaka, Takumi, Osaka 567-8680 (JP); Takahashi, Nobuyuki, Osaka 567-8680 (JP)
(74) Representative: Schwabe - Sandmair - Marx

(57) **Abstract**

There is provided an EPDM foam including, in which an amount of N-nitrosodimethylamine and N-nitrosodiethylamine generated therefrom by heating the EPDM foam at 200 °C for three hours is not more than 1 µg/g, and a 50% compression load value thereof is in a range of 0.10 to 2.0 N/cm².

## Description

### BACKGROUND OF THE INVENTION

### Field of the Invention

The present invention relates to an EPDM foam, and a sealing material including the EPDM foam. More particularly, the present invention relates to an EPDM foam which is used suitably as a sealing material for various industrial products, and a sealing material including the EPDM foam.

### Description of the Related Art

Conventionally, as a sealing material for various industrial products, an ethylenepropylenediene (hereinafter referred to as EPDM) foam has been known in terms of durability, which is obtained by foaming an EPDM rubber with a foaming agent.

In such an EPDM foam, in addition to a foaming agent, a vulcanizer for vulcanizing EPDM and a vulcanization accelerator for accelerating the vulcanization of EPDM are blended. As vulcanization accelerators, secondary amines are used frequently. However, when secondary amines are used, nitrosamines (N-nitrosodimethylamine, N-nitrosodiethylamine, and the like) may be generated.

Accordingly, as an EPDM foam capable of reducing the generation of nitrosamines therefrom, there has been proposed a foam rubber using, for example, a vulcanization accelerator (N,N'-ethylenethiourea, 2-mercaptobenzothiazole, diphenylguanidine, tetrakis(2-ethylhexyl)thiuram disulfide, or zinc dialkylthiophosphate) free from the possibility of generation of nitrosamines (see, for example, Japanese Unexamined Patent Publication No. 2006-225415).

### SUMMARY OF THE INVENTION

In the foregoing foam rubber described in Japanese Unexamined Patent Publication No. 2006-225415, a vulcanization accelerator free from the possibility of generation of nitrosamines is used therein to achieve a compressive permanent strain equivalent to that achieved with a conventional foam rubber using a vulcanization accelerator which may cause generation of nitrosamines. However, the foregoing foam rubber described in the publication has the problem of poor flexibility.

In addition, when the foam rubber having poor flexibility is used as a sealing material, the adhesion of the foam rubber to a target object to be sealed is poor, resulting in the problem that the sealing property of the foam rubber is poor.

It is an object of the present invention to provide an EPDM foam capable of reducing the generation of N-nitrosodimethylamine and N-nitrosodiethylamine therefrom, and having improved flexibility, and a sealing material including the EPDM form.

An EPDM foam of the present invention includes N-nitrosodimethylamine and N-nitrosodiethylamine, wherein an amount of N-nitrosodimethylamine and N-nitrosodiethylamine generated therefrom by heating the EPDM foam at 200 °C for three hours is not more than 1 µg/g, and a 50% compression load value thereof is in a range of 0.10 to 2.0 N/cm²_{.}

In the EPDM foam of the present invention, it is preferable that an apparent density thereof is not more than 0.5 g/cm³.

In the EPDM foam of the present invention, it is preferable that a thickness thereof is in a range of 0.1 to 50 mm.

In the EPDM foam of the present invention, it is preferable that an average cell diameter thereof is in a range of 300 to 1200 µm.

In the EPDM foam of the present invention, it is preferable that an air permeability thereof during 50% compression is in a range of not more than 1.0 cm³/cm²s.

It is preferable the EPDM foam of the present invention has an open cell structure or a semi-open/semi-closed cell structure.

A sealing material of the present invention which is a sealing material for filling a gap between members which includes the EPDM foam described above, and an adhesive layer for attachment of the EPDM foam.

With the EPDM foam of the present invention, an amount of N-nitrosodimethylamine and N-nitrosodiethylamine generated therefrom by heating the EPDM foam at 200 °C for three hours is not more than 1 µg/g, and a 50% compression load value thereof is in a range of 0.10 to 2.0 N/cm².

This can reduce the generation of N-nitrosodimethylamine and N-nitrosodiethylamine, and improve flexibility.

In addition, with the sealing material of the present invention, it is possible to easily shield the gap by attaching the EPDM foam having the effects described above.

### BRIEF DESCRIPTION OF THE DRAWINGS

FIG. 1 shows the result of measuring the normal incidence sound absorption coefficient of an EPDM foam, in which the ordinate represents the sound absorption coefficient and the abscissa represents the frequency of sound; and
FIG. 2 shows the result of measuring the normal incidence transmission loss of the EPDM foam, in which the ordinate represents the transmission loss and the abscissa represents the frequency of sound.

### DETAILED DESCRIPTION OF THE INVENTION

An EPDM foam of the present invention is obtained by foaming a foam composition containing an ethylenepropylenediene (hereinafter referred to as EPDM) rubber, a vulcanizer, a vulcanization accelerator, a foaming agent, and a foaming auxiliary agent.

EPDM is a rubber obtained by copolymerization of ethylene, propylene, and dienes. By further copolymerizing an ethylene-propylene copolymer with dienes to introduce an unsaturated bond, vulcanization with a vulcanizer can be accomplished.

Dienes are not particularly limited. Examples of dienes include, for example, 5-ethylydene-2-norbornene, 1,4-hexadiene, and dicyclopentadiene.

The diene content of EPDM is in a range of, e.g., 1 to 20 wt%, or preferably 3 to 10 wt%.

Examples of the vulcanizer include, for example, sulfur, selenium, magnesium oxides, lead monoxide, organic peroxides (e.g., cumene peroxide), polyamines, oximes (such as, e.g., p-quinone dioxime or p,p'-dibenzoylquinone dioxime), nitroso compounds (such as, e.g., p-dinitrosobenzine), resins (such as, e.g., alkylphenol-formaldehyde resins or melamine-formaldehyde condensates), and ammonium salts (such as, e.g., ammoniumbenzoate). In terms of durability resulting from the vulcanization property of the obtained EPDM foam, sulfur is preferably used. These vulcanizers may be used alone or in combination of two or more kinds.

The blending proportion of the vulcanizer can be determined selectively and appropriately since vulcanization efficiency differs depending on the type thereof. When the vulcanizer is sulfur, the blending proportion thereof based on 100 parts by weight of EPDM is in a range of, e.g., 0.1 to 5 parts by weight, or preferably 0.5 to 3 parts by weight.

The vulcanization accelerator contains a thiourea vulcanization accelerator, a thiazole vulcanization accelerator, a dithiocarbamate vulcanization accelerator, and a thiuram vulcanization accelerator. Preferably, the vulcanization accelerator consists of these four kinds of vulcanization accelerators.

The thiourea vulcanization accelerator is selected from the group consisting of N,N'-diethylthiourea, N,N'-dibutylthiourea, N,N'-diphenylthiourea, and trimethylthiourea.

The thiazole vulcanization accelerator is selected from the group consisting of 2-mercaptobenzothiazole, a zinc salt of 2-mercaptobenzothiazole, a cyclohexylamine salt of 2-mercaptobenzothiazole, and dibenzothiazyl disulfide.

The dithiocarbamate vulcanization accelerator is selected from the group consisting of zinc diisononyldithiocarbamate and zinc dibenzyldithiocarbamate.

The thiuram vulcanization accelerator is selected from the group consisting of tetrakis(2-ethylhexyl)thiuram disulfide and tetrabenzylthiuram disulfide.

The vulcanization accelerator contains the thiourea vulcanization accelerator, the thiazole vulcanization accelerator, the dithiocarbamate vulcanization accelerator, and the thiuram vulcanization accelerator such that a thiourea vulcanization accelerator/thiazole vulcanization accelerator/dithiocarbamate vulcanization accelerator/thiuram vulcanization accelerator weight ratio is in a range of, e.g., 1 to 20/1 to 20/1 to 20/1 to 30, preferably 1 to 15/1 to 10/1 to 10/1 to 30, or more preferably 2 to 15/2 to 7/1 to 5/1 to 25.

The blending proportion of the vulcanization accelerator based on 100 parts by weight of EPDM is in a range of, e.g., 0.1 to 10 parts by weight, or preferably 1.0 to 7.0 parts by weight.

Examples of the foaming agent include, for example, organic foaming agent and inorganic foaming agent. Examples of the organic foaming agent include, for example, azo compounds such as azodicarbonamide (ADCA), barium azodicarboxylate, azobisisobutyronitrile (AIBN), azocyclohexylnitrile, and azodiaminobenzene, hydrazide compounds such as 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide), semicarbazide compounds such as p-toluylenesulfonyl semicarbazide and 4,4'-oxybis(benzenesulfonyl semicarbazide), alkane fluorides such as trichloromonofluoromethane and dichloromonofluoromethane, and triazole compounds such as 5-morpholyl-1,2,3,4-thiatriazole. Examples of the inorganic foaming agent include, for example, hydrogen carbonates such as sodium hydrogen carbonate and ammonium hydrogen carbonate, carbonates such as sodium carbonate and ammonium carbonate, nitrites such as sodium nitrite and ammonium nitrite, borohydrides such as sodium borohydride, and azides. Preferably, organic foaming agents are used. More preferably, azo compounds are used or, most preferably, azodicarbonamide (ADCA) is used.

Note that, as the organic foaming agents, thermally expandable fine particles obtained by encapsulating a heat-expandable material in microcapsules or the like may also be used. As such thermally expandable fine particles, a commercially available product such as Microsphere™ (available from Matsumoto Yushi Seiyaku Co., Ltd.) may also be used. These foaming agents may be used alone or in combination of two or more kinds.

The blending proportion of the foaming agent based on 100 parts by weight of EPDM is in a range of, e.g., 1 to 30 parts by weight, or preferably 5 to 25 parts by weight.

Examples of the foaming auxiliary agent include, for example, urea compounds, salicylic acid compounds, and benzoic acid compounds. Preferably, urea compounds are used. These foaming auxiliary agents may be used alone or in combination of two or more kinds.

The blending proportion of the foaming auxiliary agent based on 100 parts by weight of EPDM is in a range of, e.g., 1 to 15 parts by weight, or preferably 2 to 10 parts by weight.

As necessary, the foam composition can appropriately contain a vulcanization auxiliary agent, a lubricant, a filler, a pigment, a softener, and the like.

Examples of the vulcanization auxiliary agent include, for example, zinc oxide. The blending proportion of the vulcanization auxiliary agent based on 100 parts by weight of EPDM is in a range of, e.g., 1 to 20 parts by weight, or preferably 2 to 10 parts by weight.

Examples of the lubricant include, for example, a stearic acid and esters thereof. The blending proportion of the lubricant based on 100 parts by weight of EPDM is in a range of, e.g., 0.5 to 5 parts by weight, or preferably 1 to 3 parts by weight.

Examples of the filler include, for example, inorganic fillers such as calcium carbonate (such as, e.g., heavy calcium carbonate), magnesium carbonate, calcium hydroxide, magnesium hydroxide, aluminum hydroxide, silicic acid and salts thereof, clay, talc, mica powder, bentonite, silica, alumina, aluminum silicate, acetylene black, and aluminum powder, organic fillers such as cork, and other known fillers. Preferably, inorganic fillers are used or, more preferably, calcium carbonate is used. These fillers may be used alone or in combination of two or more kinds.

The blending proportion of the filler based on 100 parts by weight of EPDM is in a range of not more than 300 parts by weight, or preferably not more than 200 parts by weight.

Examples of the pigment include, for example, carbon black. The blending proportion of the pigment based on 100 parts by weight of EPDM is in a range of, e.g., 0.1 to 80 parts by weight, or preferably 0.5 to 50 parts by weight.

Examples of the softener include, for example, drying oils, animal/vegetable oils (e.g., flaxseed oil), paraffins, asphalts, petroleum-derived oils (such as, e.g., paraffin process oils, naphtene process oils, and aromatic oils), low-molecular polymers, organic acid esters (e.g., ester phthalates (e.g., di-2-ethylhexyl phthalate (DOP) or dibutyl phthalate (DBP))), phosphoric acid esters, higher fatty acid esters, and alkylsulfonic acid esters), and tackifiers. Preferably, paraffins, asphalts, and petroleum-derived oils are used. These softeners may be used alone or in combination of two or more kinds.

The blending proportion of the softener based on 100 parts by weight of EPDM is in a range of, e.g., 20 to 300 parts by weight, or preferably 50 to 200 parts by weight.

As necessary, the foam composition can further appropriately contain known additives such as, e.g., plasticizer, antiaging agent, antioxidant, coloring agent, fungicide, or flame retardant in a range which does not affect the excellent effects of the obtained EPDM foam.

Next, a description is given to a producing method of the EPDM foam.

To produce the EPDM foam, the individual components shown above are first blended and kneaded using a kneader, a mixer, a mixing roll, or the like to prepare a foam composition as a mixture (preparation step).

Note that, in the preparation step, it is also possible to perform kneading, while appropriately performing heating. In the preparation step, it is also possible to, e.g., first knead the components other than the vulcanizer, the vulcanization accelerator, the foaming agent, and the foaming auxiliary agent to prepare a primary mixture, and then add the vulcanizer, the vulcanization accelerator, the foaming agent, and the foaming auxiliary agent to the primary mixture to prepare the foam composition (secondary mixture). Alternatively, it is also possible that, when the primary mixture is prepared, a part (e.g., thiourea vulcanization accelerator) of the vulcanization accelerator is blended therein.

A scorch time t₅ (according to JIS K 6300-1) of the prepared foam composition at 120 °C is in a range of, e.g., not less than 20 minutes, or preferably not less than 30 minutes.

Then, using an extruder, the prepared foam composition is extruded into a sheet-like shape or the like (molding step), and the extruded foam composition is heated to be vulcanized and foamed (foaming step).

Heating conditions for the foam composition are selected appropriately according to the vulcanization initiation temperature of the blended vulcanizer, the foaming temperature of the blended foaming agent, and the like. For example, using a circulating hot air oven or the like, the foam composition is pre-heated at a temperature in a range of, e.g., 40 to 200 °C, or preferably 60 to 160 °C for, e.g., 1 to 60 minutes, or preferably 5 to 40 minutes, and then heated at a temperature in a range of, e.g., not more than 450 °C, preferably 100 to 350 °C, or more preferably 120 to 250 °C for, e.g., 5 to 80 minutes, or preferably 15 to 50 minutes.

Alternatively, using an extruder, the prepared foam composition can also be continuously extruded (molding step) into a sheet-like shape, while being heated, to be continuously vulcanized and foamed (foaming step).

In this manner, the foam composition is vulcanized, while being foamed, and the EPDM foam can be obtained.

With the sealing material of the present invention, it is possible to easily fill a gap by attaching the EPDM foam having the effects described above.

The thickness of the obtained EPDM foam is in a range of, e.g., 0.1 to 50 mm, or preferably 1 to 45 mm.

Note that, using rolls or needles, closed cells in the obtained EPDM foam can be physically broken into an open cell.

In this manner, it is possible to form the EPDM foam into an open cell structure (having a 100% open cell ratio) or a semi-open/semi-closed cell structure (having an open cell ratio of more than 0% and less than 100%, or preferably 10 to 98%).

If the EPDM foam has the open cell structure, the EPDM foam has the advantage of excellent flexibility. If the EPDM foam has the semi-open/semi-closed cell structure, the EPDM foam has the advantage of an excellent sealing property such as waterstop and airtightness.

The average cell diameter of the EPDM foam is in a range of, e.g., 300 to 1200 µm, or preferably 300 to 1000 µm.

The volume expansion ratio (ratio between a pre-foaming apparent density and a post-foaming apparent density) of the EPDM foam thus obtained is in a range of, e.g., not less than 2, or preferably not less than 5, and normally not more than 30. The apparent density (according to JIS K 6767) of the EPDM foam is in a range of, e.g., not more than 0.5 g/cm³, preferably 0.04 to 0.5 g/cm³, or more preferably 0.04 to 0.3 g/cm³.

The 50% compression load value (according to JIS K 6767) of the EPDM foam is in a range of, e.g., 0.10 to 2.0 N/cm², or preferably 0.1 to 0.5 N/cm².

The tensile strength (maximum load in a tensile test according to JIS K 6767) of the EPDM foam is in a range of, e.g., 1.0 to 50.0 N/cm², or preferably 2.0 to 30.0 N/cm².

The elongation percentage (according to JIS K 6767) of the EPDM foam is in a range of, e.g., 10 to 1500%, or preferably 200 to 1000%.

The air permeability (at 20 °C according to JIS K 1096) of the EPDM foam during 30% compression is in a range of, e.g., not more than 2.0 cm³/cm²s, or preferably 0.001 to 1.0 cm³/cm²s. The air permeability (at 20 °C according to JIS K 1096) of the EPDM foam during 50% compression is in a range of, e.g., not more than 1.0 cm³/cm²s, or preferably 0.001 to 0.5 cm³/cm²s.

The compressive permanent strain (at 23 °C according to JIS K 6767) of the EPDM foam after 30 minutes is in a range of, e.g., 0 to 40%, or preferably 0 to 30%. The compressive permanent strain (at 23 °C according to JIS K 6767) of the EPDM foam after 24 hours is in a range of, e.g., 0 to 30%, or preferably 0 to 20%.

An amount (measured by a gas chromatographic/mass spectrometric (GC/MS) method, e.g., a measurement method described later) of nitrosamines (including N-nitrosodimethylamine and N-nitrosodiethylamine) generated when the EPDM foam is heated at 200 °C for three hours is in a range of, e.g., not more than 1.0 µg/g, preferably not more than 0.8 µg/g, or more preferably not more than a limit of detection.

In nitrosamines measured by the GC/MS method, an amount of generated N-nitrosodimethylamine is in a range of, e.g., not more than 0.4 µg/g, or preferably not more than a limit of detection and an amount of generated N-nitrosodiethylamine is in a range of, e.g., not more than 0.4 µg/g, or preferably not more than a limit of detection.

Note that, in consideration of variations in the amount of generated nitrosamines due to vaporization thereof, the measurement of nitrosamines by the GC/MS method is preferably performed after the lapse of two days or more since the foaming of the EPDM foam.

Applications of the EPDM foam are not particularly limited. The EPDM foam can be used as, e.g., as vibration proof materials, sound absorbers, sound insulators, dust control materials, heat insulators, buffers, waterstop materials, and the like which fill a gap between various members for the purposes of vibration damping, sound absorption, sound insulation, dust control, heat insulation, buffering, watertightness, and the like.

To use the EPDM foam for the applications shown above, a sealing material in which an adhesive layer for attaching the EPDM foam is provided on a surface of the EPDM foam is prepared.

In particular, if the EPDM foam has an average cell diameter of not more than 1200 µm, an air permeability of not more than 1.0 cm³/cm²s during 50% compression, a tensile strength of not less than 5 N/cm², an elongation percentage of not less than 150%, and a compressive permanent strain (at 23 °C) of not more than 10% after 24 hours, the EPDM foam can be used appropriately as a sealing material in terms of dust controllability, curved-surface conformability, and uneven-surface conformability.

Specifically, the EPDM foam having the foregoing physical properties has high flexibility (tensile strength and elongation percentage) and high restorability (low compressive permanent strain), and therefore it is possible to improve the adhesiveness thereof to a target object, and reduce an air permeable property (air permeability) in the inside of the foam. As a result, such an EPDM foam can improve a sealing property at the interface between the foam and the target object and in the inside of the foam, and can be used appropriately as a sealing material.

By the adhesive force of the adhesive layer, the sealing material is attached into a gap between various members so that the EPDM foam evenly fills the gap between various members.

Note that, if the EPDM foam has an apparent density of not less than 0.085 g/cm³, an air permeability of not more than 1.0 cm³/cm²s during 50% compression, a compressive permanent strain (at 23 °C) of not more than 10% after 24 hours, and waterstop in a waterstop test (U-shaped sample waterstop test) described later, the EPDM foam can be used appropriately as a waterstop material.

Specifically, the EPDM foam having the foregoing physical properties has high flexibility (tensile strength and elongation percentage) and high restorability (low compressive permanent strain), and therefore it is possible to improve the adhesiveness thereof to a target object, and reduce an air permeable property (air permeability) in the inside of the foam. As a result, such an EPDM foam can improve waterstop at the interface between the foam and the target object and in the inside of the foam, and can be used appropriately as a waterstop material.

When the EPDM foam has an average cell diameter of not less than 300 µm, an apparent density of not more than 0.20 g/cm³, a compressive permanent strain (at 23 °C) of not more than 10% after 24 hours, and a sound absorption range in a low frequency range (500 to 3000 Hz) in a sound absorption property test described later, the EPDM foam can be used appropriately as a sound absorber.

Specifically, the EPDM foam having the foregoing physical properties has high flexibility (tensile strength and elongation percentage) and high restorability (low compressive permanent strain), and therefore it is possible to improve the adhesiveness thereof to a target object. In addition, the EPDM foam has the average cell diameter adjusted to be not less than 300 µm, and the sound absorption range in the low frequency range (500 to 3000 Hz). As a result, such an EPDM foam can improve a sound absorption property at the interface between the foam and the target object and in the inside of the foam, and can be used appropriately as a sound absorber.

When the EPDM foam has an average cell diameter of not less than 300 µm, an apparent density of not more than 0.20 g/cm³, a compressive permanent strain (at 23 °C) of not more than 10% after 24 hours, and a normal incidence transmission loss of not less than 5 dB in the low frequency range (500 to 3000 Hz) in a sound insulation property test described later, the EPDM foam can be used appropriately as a sound insulator.

Specifically, the EPDM foam having the foregoing physical properties has high flexibility (tensile strength and elongation percentage) and high restorability (low compressive permanent strain), and therefore it is possible to improve the adhesiveness thereof to a target object. In addition, the EPDM foam has the average cell diameter adjusted to be not less than 300 µm, and the normal incidence transmission loss of not less than 5 dB in the low frequency range (500 to 3000 Hz). As a result, such an EPDM foam can improve a sound insulation property at the interface between the foam and the target object and in the inside of the foam, and can be used appropriately as a sound insulator.

When such an EPDM foam of the present invention is heated at 200 °C for 3 hours, an amount of nitrosamines generated therefrom is not more than 1 µg/g, and the 50% compression load value thereof is in a range of 0.10 to 2.0 N/cm². Therefore, it is possible to reduce the generation of nitrosamines, and improve flexibility.

### EXAMPLES

While in the following, the present invention will be described in further detail with reference to Examples and Comparative Examples, the present invention is not limited to any of them.

### (1) Production of EPDM Foam

### (1-1) Formulation Components

### <A> Resins

EPDM (A): EPT3045 (available from Mitsui Chemical Co., Ltd, and having a diene content of 4.7 wt%)
EPDM (B): EP-24 (available from JSR Corporation, and having a diene content of 4.5 wt%)
EPDM (C): Esprene 501A (available from Sumitomo Chemical Co., Ltd, and having a diene content of 4.0 wt%)
Atactic PP (atactic polypropylene resin available from Chiba Fine Chemical Co., Ltd.)

### <B> Vulcanization Auxiliary Agent:

Zinc Oxide: Second class of zinc oxides (available from Mitsui Mining & Smelting Co., Ltd.)

### <C> Lubricant:

Stearic Acid: Sakura (stearic acid powder available from NOF Corporation)

### <D> Filler:

Calcium Carbonate: N heavy calcium carbonate (available from Maruo Calcium Co., Ltd.)

### <E> Pigment:

Carbon Black: Asahi #50 (available from Asahi Carbon Co., Ltd.)

### <F> Softeners:

Paraffin: Prapellet 130 (available from Taniguchi Petroleum Co., Ltd, and having a melting point of 54.4 to 57.2 °C and a rate of penetration of not more than 50)
Asphalt: Blown Asphalt 10-20 (available from Nippon Oil Corporation, and having a softening point of 135 to 142 °C and a rate of penetration (at 25 °C) of 10 to 20)
Paraffin Oil: Paraffin process oil (Diana Process Oil PW-90 available from Idemitsu Kosan Co., Ltd., and having a density of 0.85 to 0.89 g/cm³ and a kinetic viscosity (at 40 °C) of 75.0 to 105.0 cSt )

### <G> Vulcanizer:

Sulfur: Alphagran S-50EN (available from Touchi Co., Ltd.)

### <H> Vulcanization Accelerators:

Thiourea Vulcanization Accelerator: N,N'-dibutylthiourea (Nocceler BUR available from Ouchi-Shinko Chemical Industrial Co., Ltd.)
Thiazole Vulcanization Accelerator: 2-mercaptobenzothiazole (Nocceler M available from Ouchi-Shinko Chemical Industrial Co., Ltd.)
Dithiocarbamate Vulcanization Accelerator: Zinc dibenzyldithiocarbamate (Nocceler ZTC available from Ouchi-Shinko Chemical Industrial Co., Ltd.)
Thiuram Vulcanization Accelerator: Tetrabenzylthiuram disulfide (Nocceler TBzTD available from Ouchi-Shinko Chemical Industrial Co., Ltd.)

### <I> Foaming Agents:

ADCA (azodicarbonamide): AC#LQ (available from Eiwa Chemical Industrial Co., Ltd.)
Sodium Hydrogen Carbonate: FE-507 (available from Eiwa Chemical Industrial Co., Ltd.)
DPT (N,N'-dinitrosopentamethylenetetramine): Cellular CK#54 (available from Eiwa Chemical Industrial Co., Ltd.)

### <J> Foaming Auxiliary Agent:

Urea Foaming Auxiliary Agent: Cellpaste K5 (available from Eiwa Chemical Industrial Co., Ltd.)

### (1-2) Production Steps

At the blending ratios shown in the blending formulation shown in Table 1, the resins, the vulcanization auxiliary agent, the lubricant, the filler, the pigment, the softeners, and the thiourea vulcanization accelerator were blended, and kneaded with a 3 L pressure kneader to prepare primary mixtures.

In the meantime, the vulcanizer, the vulcanization accelerators (except for the thiourea vulcanization accelerator), the foaming agents, and the foaming auxiliary agent were blended. Thereafter, the obtained mixtures were blended with the primary mixtures, and kneaded with a 10-inch mixing roll to prepare foam compositions (secondary mixtures)

### (preparation step).

Then, the scorch time t₅ of each of the composition foams was measured according to JIS K 6300-1. The result of the measurement is shown in Table 1.

Then, using a uniaxial extruder (45 mm□), the foam compositions were each extruded into a sheet-like shape having a thickness of about 8 mm to prepare foam composition sheets (molding step).

Then, the foam composition sheets were pre-heated in a circulating hot air oven at 120 °C for 20 minutes. Thereafter, a temperature in the circulating hot air oven was raised to 160 °C over a period of 10 minutes, and the foam composition sheets were heated at 160 °C for 20 minutes to be vulcanized and foamed (foaming step) so that EPDM foams were obtained.

### (2) Measurement of Physical Properties

The respective physical properties of the obtained EPDM foams were measured by the methods shown below. The result of the measurement is shown in Table 1.

### <A> Apparent Density

Measurement was performed according to JIS K 6767. Specifically, skin layers in the EPDM foams of individual Examples and Comparative Examples were removed, and specimens each having a thickness of about 10 mm were prepared. Thereafter, the weight of each of the specimens was measured, and a weight (apparent density) per unit volume was calculated.

### <B> 50% Compression Load Value

Measurement was performed according to JIS K 6767. Specifically, skin layers in the EPDM foams of individual Examples and Comparative Examples were removed, and specimens each having a thickness of about 10 mm were prepared. Thereafter, using a compression tester, each of the specimens was subjected to 50% compression at a compression speed of 10 mm/minute, and the compression load value thereof after 10 seconds was measured.

### <C> Tensile Strength and Elongation Percentage

Measurement was performed according to JIS K 6767. Specifically, skin layers in the EPDM foams of individual Examples and Comparative Examples were removed, and specimens each having a thickness of about 10 mm were prepared. Thereafter, using a dumbbell #1, the specimens were each punched out to provide measurement samples. Using a tensile tester, each of the measurement samples was pulled at a tensile speed of 500 mm/minute, and the load (tensile strength) and elongation percentage of the measurement sample when it was cut at the parallel portion of a dumbbell shape were measured.

### <D> Average Cell Diameter

Using a digital microscope (VH-8000 available from Keyence Corporation), an enlarged image of the cell portion of each of the foams was collected, and subjected to image analysis using an image analysis software (Win ROOF available from Mitani Corporation), so that the average cell diameter (µm) was determined.

### <E> Air Permeability

According to JIS K 1096 (fragile test method), air permeabilities during 30% compression and during 50% compression were measured. Specifically, skin layers in the EPDM foams of individual Examples and Comparative Examples were removed, and specimens each having a thickness of about 10 mm were prepared. Thereafter, the specimens were each punched out into a ring shape having an outer diameter of 108 mm and an inner diameter of 80 mm to provide measurement samples. Using an air permeability measuring apparatus (3C-200 available from Daiei Kagaku Seiki Mfg. Co., Ltd.), each of the measurement samples was subjected to 30% compression and 50% compression, and the air permeabilities thereof were measured.

### <F> 50% Compressive Permanent Strain

According to JIS K 6767, 50% compressive permanent strains after 30 minutes and after 24 hours were measured.

### <G> Amount of Generated N-nitrosodimethylamine and N-nitrosodiethylamine

Using a GC/MS, measurement was performed. First, two days after foaming, about 0.25 g of each of the EPDM foams (or 1 µl of a chloroform solution of N-nitrosodimethylamine or N-nitrosodiethylamine at a specific concentration as a standard sample) was placed in a 20 ml vial container, tightly sealed, and heated at 200 °C for three hours using a headspace sampler (HSS).

Then, 1 ml of a gas in the vial container after heating was injected into the GC/MS. HSS conditions and GC/MS measurement conditions are shown below.
(1) Headspace Sampler (HSS) Conditions
   Apparatus: 7694 (available from Agilent Technologies)
   Oven Temperature: 200 °C
   Heating Time: 3 hours
   Pressurization Time: 0.12 minutes
   Loop Fill Time: 0.12 minutes
   Loop Equilibration Time: 0.05 minutes
   Injection Time: 3.00 minutes
   Sample Loop Temperature: 220 °C
   Transfer Line Temperature: 220 °C
(2) Gas Chromatography (GC) Conditions
   Apparatus: 6890 (available from Agilent Technologies)
   Column: Ultra 2 (100% dimethylpolysiloxane, 50 m x 0.32 mm (Inner Diameter) x 0.52 µm (Film Thickness), available from Agilent Technologies)
   Column Temperature: Maintained at 40 °C for 3 minutes, subsequently raised to 300 °C at a rate of 10 °C/minute, and then maintained at 300 °C for 11 minutes
   Column Pressure: 17.2 kPa (constant flow mode)
   Carrier Gas: Herium
   Carrier Gas Flow Rate: 1.0 ml/minute (constant flow mode)
   Inlet Temperature: 250 °C
   Injection Method: Split (split ratio of 20:1)
   Detector: MS
(3) Mass Spectrometry (MS) Conditions
   Apparatus: 5973 (available from Agilent Technologies)
   Ionization Method: Electron ionization method
   Emission Current: 35 µA
   Electron Energy: 70 eV
   E. M. Voltage: 1259 V
   Source Temperature: 230 °C
   Analyzer: Quadrupole type
   Q-Pole Temperature: 150 °C
   Interface Temperature: 300 °C
   Mass Range: m/z 10 to 800

Then, by comparing a peak area at m/z = 74 or m/z = 102 in the obtained measurement data with the separately measured peak area of N-nitrosodimethylamine (m/z = 74) or N-nitrosodiethylamine (m/z = 102) as the standard sample, an amount of N-nitrosodimethylamine or an amount of N-nitrosodiethylamine generated from each of the EPDM foams was quantitatively determined.

The total amount of the amount of generated N-nitrosodimethylamine and the amount of generated N-nitrosodiethylamine that were quantitatively determined was assumed to be an amount of generated nitrosamines. A limit of detection was 0.4 µg/g.

### (3) Sealing Performance Test

### <A> Waterstop Test (U-Shaped Sample Waterstop Test)

First, the EPDM foams from which the surface skin layers had been removed and each of which had a thickness of about 10 mm were punched out into U-shaped shapes to prepare specimens. Then, each of the specimens was sandwiched between an acrylic plate and a stainless steel plate in the thickness direction of the specimen such that the open end (the opened end of the U-shaped shape) of the specimen faced upward. Then, the acrylic plate and the stainless steel plate were pressed in the thickness direction of the specimen so as to compress the specimen.

Then, each of the specimens was subjected to 80% compression. Then, into the inside of the U-shaped shape of the specimen, water was poured from the lower inner end portion of the specimen until the water level reached 100 mm, and the leakage of water was examined 24 hours thereafter. The result of the test is shown in Table 1.

### <Evaluation Criteria for 24-Hour U-Shaped Sample Waterstop Test (During 80%

Exc.: No water leakage was observed to show waterstop
Poor: Water leakage was observed to show lack of waterstop

### <B> Sound Absorption Property Test

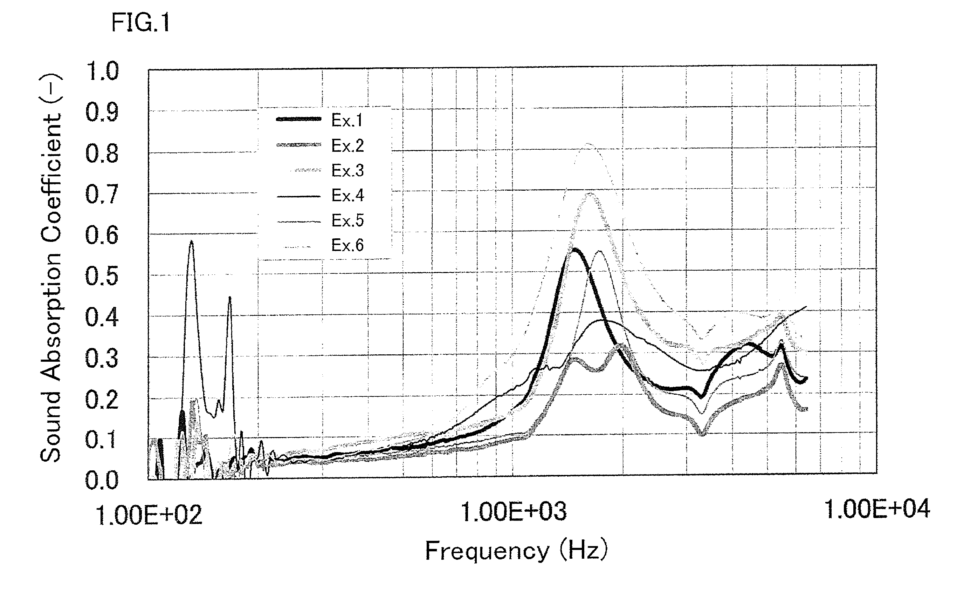

According to JIS A 1405-2, using a 4206-type acoustic tube (available from Bruel & Kjaer) and a measurement software (PULSE Material Testing Type 7758 available from Bruel & Kjaer), a normal incidence sound absorption coefficient was measured. The result of measurement is shown in FIG. 1.

As a result of the sound absorption property test, in each of Examples, the peak of the normal incidence sound absorption coefficient was observed in a low frequency range (500 to 300 Hz), as shown in FIG. 1. From this, it can be seen that the EPDM foam of each of Examples had a sound absorption range in the low frequency range (500 to 3000 Hz).

### <C> Sound Insulation Property Test

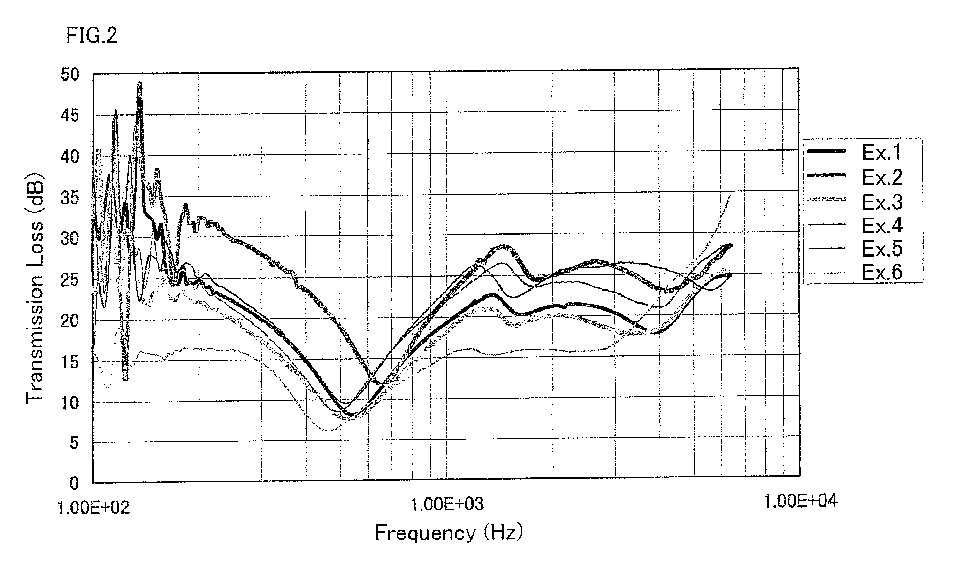

Also using a 4206-T-type acoustic tube (available from Bruel & Kjaer) and a measurement software (PULSE Material Testing Type 7758 available from Bruel & Kjaer), a normal incidence transmission loss was measured. The result of measurement is shown in FIG. 2.

From the result of the sound insulation property test, it can be seen that, as shown in FIG. 2, the EPDM foam of each of Examples had a normal incidence transmission loss of not less than 5 dB in the low frequency range (500 to 3000 Hz).

Table 1

**Table 1**

| | | | Ex.1 | Ex.2 | Ex.3 | Ex.4 | Ex.5 | Ex.6 | Comp. Ex.1 | Comp. Ex.2 | Comp.Ex.3 | Comp. Ex.4 | Comp. Ex.5 |
|---|---|---|---|---|---|---|---|---|---|---|---|---|---|
| | Resins | EPDM(A) | 50 | 50 | 50 | 50 | 50 | 50 | 50 | | 50 | 50 | 50 |
| | | EPDM(B) | 50 | 50 | 50 | 50 | 50 | 50 | 50 | | 50 | 50 | 50 |
| | | EPDM(C) | | | | | | | | 100 | | | |
| | | Atactic PP | | | | | | | | 200 | | | |
| | Vulcanization Auxiliary Agent | Zinc Oxide | 5 | 5 | 5 | 5 | 5 | 5 | 5 | 5 | 5 | 5 | 5 |
| | Lubricant | StearicAcid | 3 | 3 | 3 | 3 | 3 | 3 | 3 | 3 | 3 | 3 | 3 |
| | Filler | Calcium Carbonate | 100 | 100 | 100 | 100 | 100 | 100 | 100 | 50 | 100 | 100 | 100 |
| | Pigment | Carbon Black | 10 | 10 | 10 | 10 | 10 | 10 | 10 | | 10 | 10 | 10 |
| | Softeners | Paraffin | 5 | 5 | 5 | 5 | 5 | 5 | 5 | | 5 | 5 | 5 |
| | | Asphalt | 130 | 130 | 130 | 130 | 130 | 130 | 130 | | 130 | 130 | 130 |
| | | Paraffin Oil | 40 | 40 | 40 | 40 | 40 | 40 | 40 | 20 | 40 | 40 | 40 |
| | Vulcanizer | Sulfur | 1.6 | 1.35 | 1.35 | 1 | 1.35 | 1.35 | 1.35 | 2 | 1.35 | 1.35 | 1.35 |
| Blending Formulation (Part By Weight) | Vulcanization Accelerators | Thiourea Vulcanization Accelerator | 1 | 1 | 1 | 1 | 1 | 1 | 5 | | | 1 | 1 |
| | | Thiazole Vulcanization Accelerator | 0.45 | 0.45 | 0.45 | 0.45 | 0.45 | 0.45 | 2.25 | 2 | 0.45 | | 0.45 |
| | | Dithiocarbarmate Vulcanization Accelerator | 0.2 | 0.2 | 1.2 | 0.2 | 0.2 | 0.2 | 0.2 | | 1.13 | 0.2 | 0.2 |
| | | Thiuram Vulcanization Accelerator | 2.26 | 0.57 | 1.13 | 0.2 | 1.8 | 1.8 | 8 | | 1.13 | 1.13 | 1.13 |
| | Foaming Agents | ADCA | 20 | 18.5 | 17.5 | 10 | 20 | 20 | 20 | | 18.5 | 18.5 | 8 |
| | | Sodium Hydrogen Carbonate | | | | | | | | 20 | | | |
| | | DPT | | | | | | | | 20 | | | |
| | Foaming Auxiliary Agent | Urea Foaming Auxiliary Agent | 6.5 | 6.5 | 5.5 | 5.5 | 6.5 | 6.5 | 6.5 | | 4.7 | 6.5 | 6.5 |
| Scorch Time (t₅, at 120 °C) | | | 20 | 20 | 20 | 20 | 20 | 20 | 20 | - | - | - | 20 |
| Physical Cell Collapse | | | Present | Present | Present | Present | Present | Absent | Foaming Failure | Present | Foaming Failure | Foaming Failure | Present |
| | Apparent Density (g/cm³) | | 0.082 | 0.148 | 0.097 | 0.133 | 0.074 | 0.074 | | 0.15 | | | 0.177 |
| | 50% Compression Load Value (N/cm²) | | 0.49 | 1.38 | 1.03 | 0.64 | 0.28 | 0.6 | | 0.8 | | | 5.18 |
| | Tensile Strength (N/cm²) | | 8.2 | 12.6 | 11.5 | 10.1 | 5.9 | 7.3 | | - | | | 20.6 |
| | Elongation Percentage (%) | | 778 | 665 | 513 | 835 | 468 | 540 | | - | | | 503 |
| Physical Properties | Average Cell Diameter (µm) | | 468 | 390 | 520 | 415 | 490 | 484 | | Foaming - Failure. | | | - |
| | Air Permeability (During 30% Compression, cm³/cm²s) | | 0.03 | 0.003 | 0.012 | 0.003 | 0.016 | 0.011 | | - | | | - |
| | Air Permeability (During 50% Compression, cm³/cm²s) | | 0.014 | 0.002 | 0.003 | 0.001 | 0.006 | 0.003 | | - | | | - |
| | 50% Compressive Permanent Strain (After 30 Minutes, %) | | 5.3 | 7.8 | 26.9 | 3.9 | 5 | 10.8 | | - | | | - |
| | 50% Compressive Permanent Strain (After 24 Hours, %) | | 0.5 | 2.9 | 6.7 | 0.6 | 0.6 | 0.6 | | - | | | - |
| | N-nitrosodimethylamine (µg/g) | | <0.4 | <0.4 | <0.4 | <0.4 | <0.4 | <0.4 | | ≥1 | | | <0.4 |
| | N-nitrosodiethylamine (µg/g) | | <0.4 | <0.4 | <0.4 | <0.4 | <0.4 | <0.4 | | ≥1 | | | <0.4 |
| Sealing Property | 24-Hour U-Shaped Sample Waterstop (During 80% Compression) | | Poor | Exc. | Exc. | Exc. | Poor | Poor | | - | | | - |

## Claims

1. An EPDM foam, wherein
an amount of N-nitrosodimethylamine and N-nitrosodiethylamine generated therefrom by heating the EPDM foam at 200 °C for three hours is not more than 1 µg/g, and
a 50% compression load value thereof is in a range of 0.10 to 2.0 N/cm².

2. The EPDM foam according to claim 1, wherein an apparent density thereof is not more than 0.5 g/cm³.

3. The EPDM foam according to claim 1, wherein a thickness thereof is in a range of 0.1 to 50 mm.

4. The EPDM foam according to claim 1, wherein an average cell diameter thereof is in a range of 300 to 1200 µm.

5. The EPDM foam according to claim 1, wherein an air permeability thereof during 50% compression is in a range of not more than 1.0 cm³/cm²s.

6. The EPDM foam according to claim 1, wherein the EPDM foam has an open cell structure or a semi-open/semi-closed cell structure.

7. A sealing material for filling a gap between members, comprising:
a foam; and
an adhesive layer for attachment of the foam, wherein,
an amount of N-nitrosodimethylamine and N-nitrosodiethylamine generated from the foam by heating the foam at 200 °C for three hours is not more than 1 µg/g, and
a 50% compression load value of the foam is in a range of 0.10 to 2.0 N/cm².
